# EUROPEAN PATENT APPLICATION

(11) **EP 2 889 931 A1**
(43) Date of publication of application: **01.07.2015**
(21) Application number: 13831151.9
(22) Date of filing: 21.08.2013
(51) Int. Cl.: H01M 2/08, H01M 2/12

(54) **ADAPTOR PLUG FOR INDUSTRIAL BATTERY**

(30) Priority: 22.08.2012 KR 20120091663
(71) Applicant: Maroomcs Co. Ltd, Chungcheongbuk-do 363-887 (KR)
(72) Inventor: KANG, Yun Jeong, Cheongju-si Chungcheongbuk-do 361-815 (KR); HAN, Yeon Soo, Cheongju-si Chungcheongbuk-do 361-819 (KR)
(74) Representative: Nobbe, Matthias
(86) International application number: PCT/KR2013/007464
(87) International publication number: WO 2014/030908

(57) **Abstract**

The present invention provides an adaptor plug for an industrial battery comprising an inner ring and an outer ring spaced apart from each other, the outer ring covering the inner ring; and a gas-liquid separating unit disposed between the inner ring and the outer ring, the gas-liquid separating unit blocking foams generated from an electrolyte by a hydrogen gas and passing only the hydrogen gas, wherein the adaptor plug is inserted into and mounted on an injection hole of the battery by being assembled with an injection valve. The gas-liquid separating unit includes an inner plate disposed at an outer surface of the inner ring to form a gap between the outer surface of the inner ring and an inner surface of the outer ring; and an outer plate disposed at an inner surface of the outer ring to form a gap between the inner surface of the outer ring and the outer surface of the inner ring, wherein the inner plate and the outer plate are spaced apart from each other in a vertical direction and partially overlap each other to form a multi-layered structure.

In the adaptor plug for the industrial battery according to the present invention, the foams of the electrolyte in the distilled water filing operation is not leaked, and only the hydrogen gas generated from the electrolyte is smoothly exhausted. As a result, there is an advantage of improving the stability of the distilled water filing operation.

## Description

### Technical Field

The present invention relates to an adaptor plug being capable of preventing a leakage problem of an electrolyte resulted by a hydrogen gas generated in a process of charging an industrial battery.

### Background Art

The industrial battery as a kind of a secondary battery (or cell) has a combination of a plurality of cells, in each of which an anode plate and a cathode plate are inserted and an electrolyte is filled, and are widely used for supplying a power to an electric cart, e.g., a car, or a transport machine, e.g., an electric forklift.

Generally, in the industrial battery, a discharging operation generating the power by using a chemical energy from a chemical reaction between the anode plate and the cathode plate in the electrolyte and a charging operation sulphatizing the electrolyte by an electric energy supplied from an outer source are repeated such that the industrial battery is continuously used.

In a process of charging the industrial battery, a hydrogen gas is generated from the electrolyte by a chemical reaction between the electrolyte and the electrodes. Since an inner pressure of the battery becomes higher by the hydrogen accumulation, there is an explosion risk.

Accordingly, generally, a gas exhausting hole is formed at a hole cap, which is used to close an injection hole formed at the battery, to enable the hydrogen gas generated in the battery to be exhausted.

On the other hand, since the distilled water should be filled to the electrolyte, an amount of which is decreased by the use of the industrial battery, a distilled water filing system for facilitating the filing operation of the distilled water may be used.

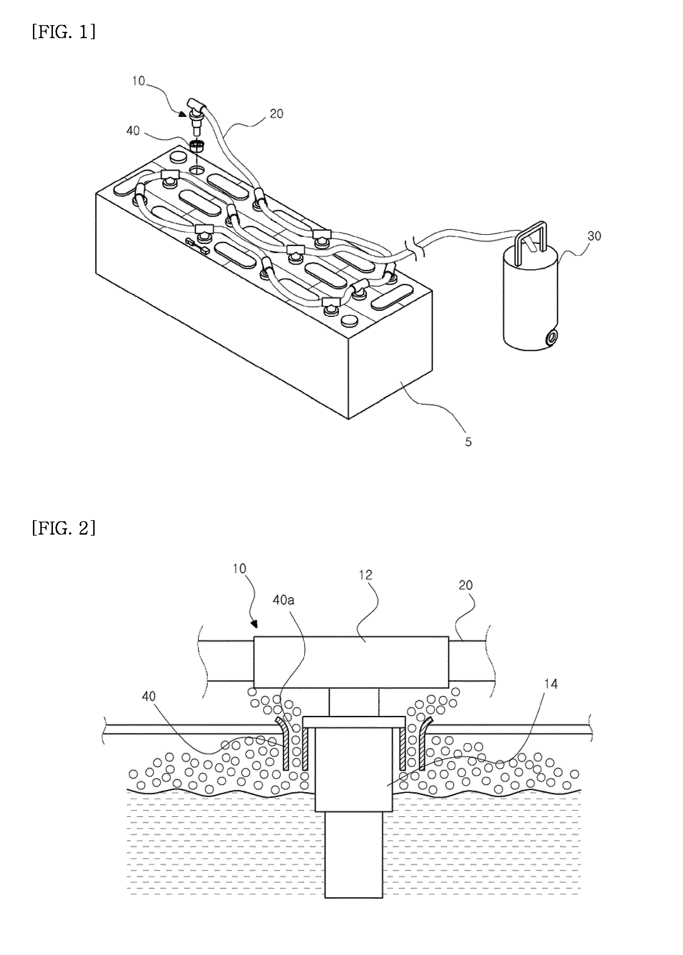

As shown in FIG. 1, the distilled water filing system includes a plurality of injection valves 10, which are inserted into and mounted on an injection hole, a supply hose 20 connected to the injection valve and a filing cart 30 supplying the distilled water to the injection valve 10 through the supply hose 20.

The injection valve 10 includes a connection port 12 for connecting with the supply hose 20, a valve pipe 14 inserted into the battery and a reaction unit, e.g., float type or a pressure-sensitive type, disposed in the valve pipe 14.

When the above distilled water filing system is used, as shown in FIG. 2, an adaptor plug 40, which is assembled with the injection valve 10, is used to exhaust the hydrogen gas.

The related art adaptor plug 40 is inserted into and mounted on the injection hole by being assembled with the injection valve 10 by being inserted into the valve pipe 14 of the injection valve 10 and includes a gas exhausting hole 40a.

Accordingly, in the related art, even when the injection valve 10 is closed, the hydrogen gas is continuously exhausted through the gas exhausting hole 40a of the adaptor plug 40 such that the problem by the hydrogen gas is prevented.

On the other hand, the hydrogen gas generates bubbles in the electrolyte such that foams are generated in a surface of the electrolyte by the bubbles. By the structure of the hole cap or the adaptor plug 40, the foams rises and leaks from the battery through the gas exhausting hole.

Accordingly, in the related art, the same problem of leakage of the electrolyte by the leaked foams is generated such that some problems in that the worker has damages, e.g., burns, or the peripheral equipments are corroded by the electrolyte including sulfuric acid are generated.

### Detailed Illustration of Invention

### Technical Problem

The present invention has been made to solve the problems and provides an adaptor plug for an industrial battery being capable of smoothly exhausting the hydrogen gas generated in an operation of charging the battery and preventing leakage of foams generated from the electrolyte.

### Technical Solution

In order to achieve the above object, the present invention provides an adaptor plug for an industrial battery comprising an inner ring and an outer ring spaced apart from each other, the outer ring covering the inner ring; and a gas-liquid separating unit disposed between the inner ring and the outer ring, the gas-liquid separating unit blocking foams generated from an electrolyte by a hydrogen gas and passing only the hydrogen gas, wherein the adaptor plug is inserted into and mounted on an injection hole of the battery by being assembled with an injection valve.

The gas-liquid separating unit includes an inner plate disposed at an outer surface of the inner ring to form a gap between the outer surface of the inner ring and an inner surface of the outer ring; and an outer plate disposed at an inner surface of the outer ring to form a gap between the inner surface of the outer ring and the outer surface of the inner ring, wherein the inner plate and the outer plate are spaced apart from each other in a vertical direction and partially overlap each other to form a multi-layered structure.

The inner plate and the outer plate have a downwardly inclined shape

The inner ring and the outer ring are assembled to be spaced apart from each other with a pre-determined gap by being connected to each other by a connection plate arranged along a vertical direction.

### Effect of Invention

In an adaptor plug for an industrial battery according to the present invention, the foams of the electrolyte is not leaked in an operation of charging the battery due to a gas-liquid separation effect, and only the hydrogen gas, which is generated from the electrolyte, is smoothly exhausted. As a result, there is an advantage of improving the stability of the charging operation of the battery.

### Description of Drawings

FIG. 1 is a view showing a conventional distilled water filing system and an adaptor plug for an industrial battery.
FIG. 2 is a cross-sectional view illustrating a function of the related art adaptor plug.
FIG. 3 is a perspective view of an adaptor plug according to the present invention.
FIG. 4 is a cross-sectional perspective view of an adaptor plug according to the present invention.
FIG. 5 is a perspective view showing an assembling structure of an adaptor plug and an injection valve.
FIG. 6 is a cross-sectional view illustrating a function of an adaptor plug according to the present invention.

### Embodiment of Invention

Reference will now be made in detail to the preferred embodiments, examples of which are illustrated in the accompanying drawings 3 to 6.

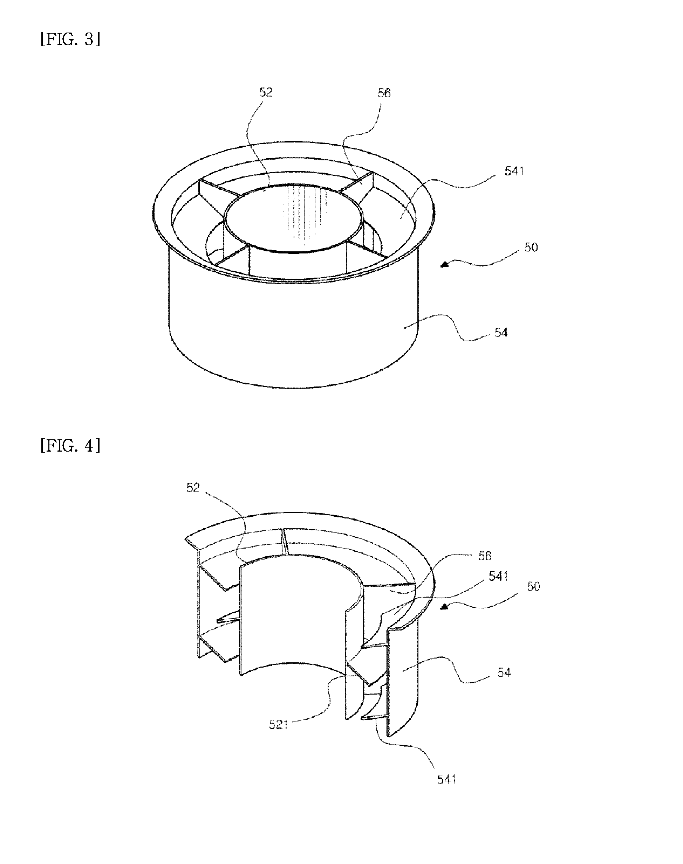

As shown in FIGs. 3 and 4, an adaptor plug 50 for an industrial battery includes an inner ring 52, an outer ring 54, which is spaced apart from and covering the inner ring 52, and a gas-liquid separation unit disposed between the inner ring 52 and the outer ring 54. The gas-liquid separation unit blocks foams generated from an electrolyte by a hydrogen gas and passes the hydrogen gas.

The gas-liquid separation unit includes an inner plate (or inner sheet) 521, which is disposed at an outer surface of the inner ring 52 and form a gap between the outer surface of the inner ring 52 and an inner surface of the outer ring 54, and an outer plate (or outer sheet) 541, which is disposed at the inner surface of the outer ring 54 and form a gap between the outer surface of the inner ring 52 and the inner surface of the outer ring 54.

The inner plate 521 and the outer plate 541 are arranged to be spaced apart from each other along a up-down direction, i.e., vertical direction, and to partially overlap to have a multi-layered structure and a downwardly inclined shape.

The inner ring 52 and the outer ring 54 are connected to each other by a plurality of connection plates 56 arranged along a vertical direction. As a result, the inner ring 52 and the outer ring 54 are assembled with a pre-determined gap.

In this instance, as an exemplary one of the arrangement of the inner plate 521 and the outer plate 541 of the gas-liquid separation unit, the outer plates 541 are arranged at top and bottom positions, and one inner plate 521 is arranged between two outer plates 541. As a result, the gas-liquid separation unit has a triple-layered structure.

The multi-layered structure of the inner plate 521 and the outer plate 541 is modified according to a number of the inner plate 521 and the upper plate 541.

The effect of the above-described invention is explained below.

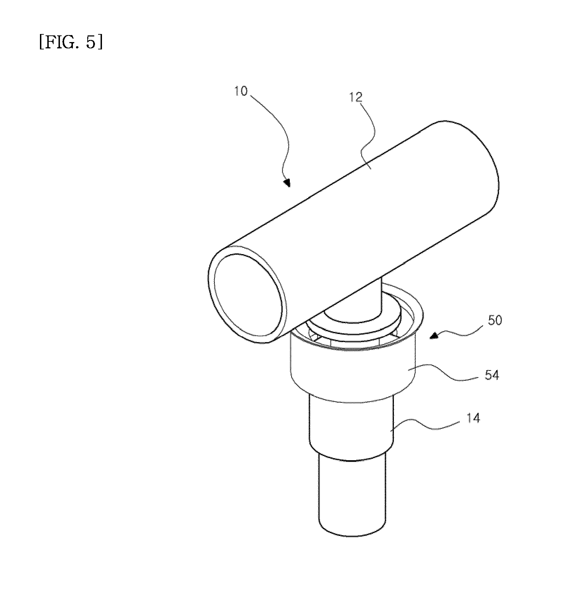

Firstly, as shown in FIG. 5, the adaptor plug 50 according to the present invention is inserted into and mounted on the battery by inserting a valve pipe 14 of an injection valve 10 into the inner ring 52 and by being assembled with the injection valve 10.

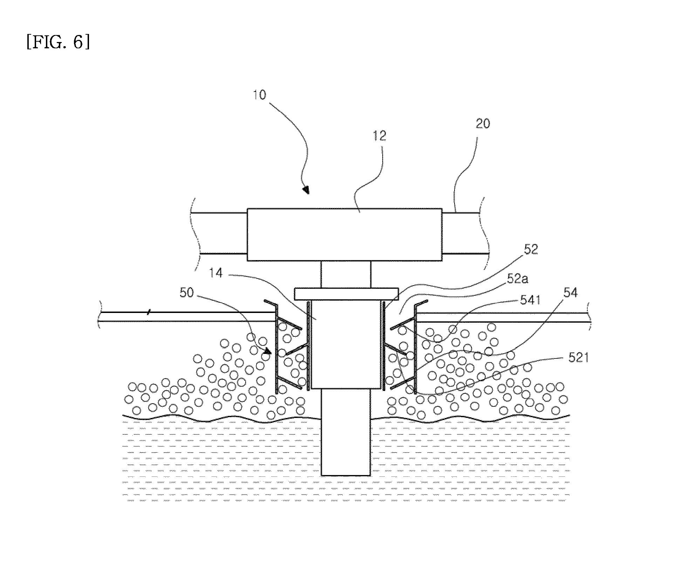

As shown in FIG. 6, in the mounting state of the adaptor plug 50, the foams generated from the electrolyte by hydrogen gas bubbles in an operation of charging the battery rises and flows into the gap between the inner ring 52 and the outer ring 54 of the adaptor plug 50.

In this instance, by the arrangement of the inner plate 521 and the upper plate 541, which constitutes the gas-liquid separation unit, a flow path 50a of a zigzag shape is formed between the inner and outer rings 52 and 54 of the adaptor plug 50.

Accordingly, while the foams, which flow into a space between the inner and outer rings 52 and 54 of the adaptor plug 50, passes the zigzag shaped flow path 50a, the foams burst. As a result, the foams are not leaked, and only the hydrogen gas is exhausted. Namely, the gas-liquid separation effect is generated.

In addition, by the downwardly inclined shape of the inner plate 521 and the outer plate 541, the problems of exhausting of the foams by overflow along the inner plate 521 and the outer plate 541 are prevented.

On the other hand, while the foams burst by the inner plate 521 and the outer plate 541, fine drop particles may be scattered. However, the scattered fine drop particles of the electrolyte are also blocked by the inner plate 521 and the upper plate 541, which form the multi-layered structure, such that the fine drop particles are not leaked and flow into the electrolyte.

As described above, by the gas-liquid separation effect in the adaptor plug of the present invention, the foams, i.e., the electrolyte, by the hydrogen gas generated from the electrolyte is not leaked, while only the hydrogen gas is exhausted.

## Claims

1. An adaptor plug for an industrial battery, comprising:
an inner ring and an outer ring spaced apart from each other, the outer ring covering the inner ring; and
a gas-liquid separating unit disposed between the inner ring and the outer ring, the gas-liquid separating unit blocking foams generated from an electrolyte by a hydrogen gas and passing only the hydrogen gas,
wherein the adaptor plug is inserted into and mounted on an injection hole of the battery by being assembled with an injection valve.

2. The adaptor plug for the industrial battery according to claim 1, wherein the gas-liquid separating unit includes:
an inner plate disposed at an outer surface of the inner ring to form a gap between the outer surface of the inner ring and an inner surface of the outer ring; and
an outer plate disposed at an inner surface of the outer ring to form a gap between the inner surface of the outer ring and the outer surface of the inner ring,
wherein the inner plate and the outer plate are spaced apart from each other in a vertical direction and partially overlap each other to form a multi-layered structure.

3. The adaptor plug for the industrial battery according to claim 2, wherein the inner plate and the outer plate have a downwardly inclined shape.

4. The adaptor plug for the industrial battery according to claim 1, wherein the inner ring and the outer ring are assembled to be spaced apart from each other with a pre-determined gap by being connected to each other by a connection plate arranged along a vertical direction.
